# EUROPEAN PATENT SPECIFICATION

(11) **EP 0 986 813 B1**
(45) Date of publication and mention of the grant of the patent: **05.03.2003**
(21) Application number: 98928729.7
(22) Date of filing: 29.05.1998
(51) Int. Cl.: G11B 7/26

(54) **SEMI-MANUFACTURED STAMPER**
HALBFERTIGSTEMPEL
MATRICE DE PRESSAGE

(30) Priority: 02.06.1997 SE 9702091; 25.09.1997 SE 9703479
(43) Date of publication of application: 22.03.2000
(73) Proprietor: OTB Group B.V., 5652 AM Eindhoven (NL)
(72) Inventor: ÖHMAN, Ove, S-755 91 Uppsala (SE); BILLMAN, Ake, S-177 61 Järfälla (SE)
(74) Representative: Prins, Adrianus Willem
(86) International application number: SE9801032
(87) International publication number: WO98055995

(56) References cited:
- EP-A- 0 429 346
- EP-A- 0 495 281
- EP-A- 0 667 608
- EP-A- 0 694 916
- PATENT ABSTRACTS OF JAPAN vol. 018, no. 173 (M-1581), 24 March 1994 & JP 05 337899 A (RICOH CO LTD), 21 December 1993
- PATENT ABSTRACTS OF JAPAN vol. 016, no. 003 (P-1294), 7 January 1992 & JP 03 225646 A (NEC CORP), 4 October 1991
- PATENT ABSTRACTS OF JAPAN vol. 014, no. 486 (M-1038), 23 October 1990 & JP 02 196641 A (FUJI PHOTO FILM CO LTD), 3 August 1990

## Description

### Technical Field of the Invention

The present invention relates to methods of providing a semi-manufactured optical disc stamper. The invention also relates to such a stamper in combination with a protective package, and to a process for replication of optical discs by means of a structured stamper of the invention.

### Description of Related Art

Optical Discs, such as compact discs (CD), digital video discs or digital versatile discs (DVD) and optically readable memories such as CD-ROM's are manufactured with the use of an injection moulding machine.

The injection moulding machine comprises an injection moulding tool which determines the shape of the disc to be manufactured. Such a tool comprises a stamper having a pattern of protrusions to be imprinted on the disc. Hence the pattern of the stamper is a model for information to be imprinted in the disc to be manufactured.

Hence, a manufacturer of optical discs having an amount of mfonnation-to-be-replicated, such as for example a music recording or computer data, needs to obtain a stamper with a pattern corresponding to that information.

According to prior art a stamper is manufactured in the following way: Firstly, a master having a pattern corresponding to the pattern to be on me Optical Discs is manufactured. Secondly the master is used for producing the stamper, such that the pattern of the stamper is the mirror image of the pattern of the master.

Each of the two steps "manufacturing a master", and "manufacturing a stamper with the use of the master" in itself comprises a number of steps. For example the manufacture of a master, according to prior art, involves (1) coating a smooth glass plate with a photosensitive material, and thereafter (2) curing the photoresist before (3) radiating the surface of the coated glass plate with a modulated laser to record a spiral track of information in the photoresist material. In this last mentioned step the areas designated to become pits are exposed to laser light.

Thereafter the master glass plate is subjected to an etching process (4) leading to the illuminated areas, i.e. the pits-to-be, being etched out such that a pattern of pits is generated. In other words the surface of the master glass plate is made structured. After a drying process (5) the patterned, i.e. structured, surface of the plate is metallized (6), e.g. by vacuum deposition or sputtering of a thin conductive layer. The resulting multilayer construction (having a glass layer, a structured photoresist layer and a thin structured conductive layer) constitutes the master.

The step of generating a stamper with the use of the master according to prior art involves (I) deposition of nickel by electroplating, and (2) removal of the resulting nickel plate from the master. This removal step commonly results in a nickel plate having traces of photoresist and silver on the patterned surface, due to strong adhesion between the nickel and the conductive layer of the master. Hence the information carrying part of the master is destroyed in the process of making the stamper.

The prior art process of making a stamper also involves a cleaning process (3) for removing any traces of photoresist and/or silver from the patterned surface of the nickel plate. Thereafter the opposite side of the nickel plate is polished, a centre opening is punched out and an outer diameter punch is used to make the plate circular. At that stage a stamper suitable for use for mass production of information carrying optical discs has been obtained. Sometimes, however, an error occurs during one of the steps causing the obtained master and/or stamper to have substandard quality. Such a master or stamper will have to be rejected.

Hence, a manufacturer of optical discs needs to perform a long process starting with a master, providing a structure on the master, and then creating a structured stamper with use of the master before the replication of optical discs can be initiated. This method requires a large amount of complex machinery to be installed at the premises of the manufacturer of optical discs - a machinery which also has to be handled by skilled personnel. Since the process consists of a large number of steps, it is also time consuming.

As an alternative to carrying out this long and complicated process, some manufacturers of optical discs delivers the information-to-be-replicated to a third party. The third party then manufactures a structured stamper in accordance with the above described method and delivers it to the manufacturer of optical discs. This simplifies the procedure for the manufacturer of optical discs, but the total complexity of the method increases, and the time required for obtaining the information carrying stamper is relatively long.

EP 0 667 608 discloses a method of manufacturing a structured stamper matrix for the production of optical discs by applying a photoresist film to an unstructured plate and structuring the photoresist film. According to EP 0 667 608 a nickel shell is glued to a glass plate and photoresist, AZ RAY-PRO by Hoechst, is provided by a spin coating process. The nickel shell/glass plate substrate assembly is spin dried and heated to dry the photoresist film, and thereafter the assembly is exposed by means of a master registration system, MRS, using a laser beam registration apparatus. The exposed photoresist film is heated; developed so as to provide a structured photoresist film, and then the structured photoresist film is heated again so as to provide a stuctured stamper. The structured stamper matrix is thereafter separated from the glass substrate and, in the conventional manner, the final processing operations include polishing the rear side and cutting a central hole into a standard 8 inch matrix. The matrix is placed in the mould of an injection moulding machine for mass-producing CD replicas.

EP 0 694 916 discloses a method of fabricating a stamper by applying a negative-acting photoresist on a super mirror finished surface of a nickel substrate; and exposing and developing the photoresist with the pattern corresponding to a signal to be recorded. Exposure is achieved with a chrome mask, and after the exposure a concave/convex pattern is formed in the nickel substrate by an ion milling process. Thereafter the photoresist is removed and the substrate is washed. Although the teaching of EP 0 694 916 avoids problems associated with the electroplating process, such as measuring and managing electroplating bath composition and impurities, the process according to that teaching is still very complex and time consuming.

EP 0 165 804 discloses a method of producing a patterned stamper provided with address signal pits and a guide track. According to the disclosure the stamper is produced by coating a nickel substrate with a 30 nm thick chromium film by sputtering, and then coating it, by sputtering, with a 20 nm thick molybdenum film. The molybdenum film is spin coated with photosensitive resist AZ 2400 by Hoechst, and a guide track portion as well as an address pit portion is irradiated in the photosensitive resist with an electron beam. The guide track portion is irradiated with an intensity of 10 uc/cm² and the address pit portion is irradiated with a higher intensity of 20 uc/cm² so that the subsequent development results in removal of the photosensitive resist only for the address pit portion, whereas the guide track portion of the of the photosensitive resist remains covering the molybdenum film. A subsequent ion milling process with Ar ions, a plasma etching with CCl₄ and thereafter a plasma etching treatment with tetra fluorocarbon results in a stamper having a guide track and address signal pits. EP 0 165 804 also teaches to replicate high-density recording disks provided with a guide track and address signal pits using the stamper; The optical disks replicated are of the write type where information is to be recorded in the optical disk by the user of the optical disk. The method according to EP 0 165 804 is complex and requires a large number of difficult steps involving hazardous chemicals for obtaining a patterned stamper having only address signal pits and a guide track.

JP-A-3 225 646 and EP-A-0 495 281 disclose stampers having information pits and thus lacking unstructured surface portions.

### Summary

A problem to which the present invention is directed is to enable a manufacturer of optical discs to reduce the mean time duration from reception of information to-bereplicated, such as for example a music recording or computer data, until successful replication of optical discs recorded with that information.

This problem is solved, in accordance with an embodiment of the invention, by a method of providing a semi-manufactured stamper, the method comprising the steps of:
a) selecting a substantially disc-shaped member having a substantially flat first surface, and a second surface forming a back surface of the semi-manufactured stamper; said first surface being structurable and substantially unstructured. The method further includes the steps of:
b) applying a layer sensitive to irradiation on said first surface such that an unexposed and exposable semi-manufactured stamper is provided;
c) enclosing the unexposed semi-manufactured stamper in a protective package such that the sensitive film is maintained substantially unexposed; and
d) treating the semi-manufactured stamper, before performing step c), said treatment including:
   d1) treating said second surface of the semi-manufactured stamper such that a mean surface deviation value below 2 micrometer is obtained.

Such a blank stamper can be manufactured without having access to the information-to-be-replicated. In other words, the blank stamper can be manufactured without consideration to the pattern or structure to be formed in the Optical-Discs-to-be.

An inspection inspection of the unexposed semi-manufactured stamper is carried out after applying and drying the sensitive layer.

Any semi-manufactured blank stampers which are of inferior quality prior to the step of enclosing it in the package, will be rejected. The rejected semi-manufactured stampers will not be packed. Only high-quality blank stampers, which pass the inspection will be enclosed in the package.

The above described method provides the invention with the advantage of enabling an uncomplicated manufacture of a structured stamper. According to an embodiment of the invention a method of manufacturing a structured stamper comprises the steps set forth in claims 19 and 20.

This solution provides the advantageous effects of reducing the costs and improving the yield, i.e. decreased rejection rate, in the process of obtaining a structured stamper. This is achieved since the structured stamper can be obtained from the semi-manufactured stamper by means of a process which is reduced to an advantageously low number of steps. Since the semi-manufactured stamper is provided with an unexposed sensitive layer the manufacturer-of-optical-disks is relieved from time consuming and difficult work such as providing a photoresist film with a precise thickness on the disc-shaped member. Since the manufacturer-of-optical-discs starts out with a high-quality blank stamper, which is already adapted for fitting into his injection moulding machine, the number of steps to be performed by the manufacturer-of-optical-discs is advantageously low. This leads to a high yield in that process.

The improved yield leads to fewer cases of rejection of structured stampers. When, according to the prior art, a structured stamper has been rejected the process has to start over again, which includes the repetition of a number of steps. This is time consuming and can be quite frustrating, particularly when there is a hurry to achieve replication of optical discs with the selected information. This frustration and the associated time delay is now eliminated or significantly reduced.

Hence, the blank stamper is transformable into a structured stamper by means of an advantageously uncomplicated method, thereby enabling a manufacturer of optical discs to obtain a stamper provided with a selectable structure by means of a quick and cost-effective method.

According to an embodiment of the invention, the process for manufacturing an optical disc comprises the steps set forth in claim 15.

According to an embodiment the package is air tight and, when closed, it prevents light from reaching the enclosed blank stampers. Since the package is air tight any solvent remaining in the unexposed sensitive film will only evaporate until there is a balance of concentration of solvent in the unexposed sensitive film and in the gas-filled space inside the package. This ensures a long stability of the unexposed sensitive film. Hence a long shelf-life for the blank stampers is ensured.

### Brief Description of the Drawings

Figure 1A is a top view of a blank stamper according to a first embodiment of the invention.
Figure 1B is a top view of the stamper according to Fig 1A after structuring..
Figure 1C is a schematic sectional side view of a part of the stamper according to Fig 1B.
Figure 2A is a flow chart illustrating a process of obtaining a blank stamper according to Figure 1A.
Figure 2B is a flow chart illustrating a process of obtaining a structured stamper according to Figure 1B and 1C.
Figure 3 is a schematic side view of a part of a plate to be used for manufacturing a stamper.
Figure 4 is a schematic sectional side view of a part of a blank stamper means according an embodiment of the invention.
Figure 5 is a schematic sectional side view of the blank stamper means shown in Figure 4, additionally including a layer sensitive to irradiation.
Figure 6 is a schematic sectional side view of the blank stamper means according to Fig. 5, after the creation of a pattern in the exposure sensitive layer.
Figure 7 is a schematic sectional side view of a semi-manufactured stamper obtained from the blank stamper shown in Figure 6 by subjecting it to partial etching.
Figure 8 is a schematic sectional side view of the semi-manufactured stamper, shown in Figure 7, after the etching process but before removal of the exposure sensitive material.
Figure 9 is a schematic sectional side view of a part of a blank stamper according to a second embodiment of the invention.
Figure 10 is a schematic sectional side view of a second embodiment of a structured stamper according to the invention.
Figure 11 is a top view of an embodiment of a blank stamper.
Figure 12 is a sectional top view of a package for a plurality of blank stampers.
Figure 13 is a sectional side view of the package shown in Fig 12.
Figure 14A is a flow chart illustrating a second embodiment of a process of obtaining a blank stamper.
Figure 15 is a schematic sectional side view of a work piece as shown in Figure 3, after shaping it for fitting with an injection moulding machine.
Figure 16 is a schematic sectional side view of an embodiment of a blank stamper means including a layer sensitive to irradiation
Figure 17 is a schematic sectional side view of a blank stamper means shown in Figure 16, after shaping it for fitting with an injection moulding machine.
Figure 18 is a schematic sectional side view of a blank stamper means shown in Figure 17, after recording and developing an information pattern in the layer sensitive to irradiation.
Figure 19 is a schematic sectional side view of a blank stamper means shown in Figure 18, after subjecting it to ion etching.
Figure 20 is a schematic sectional side view of a blank stamper means shown in Figure 19, after removing any remaining portions of the layer sensitive to irradiation.

### Detailed Description of Embodiments

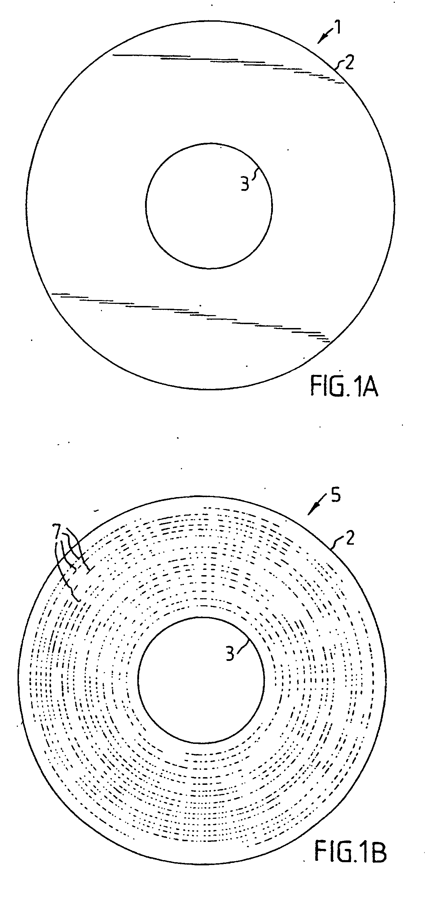

Figure 1A is a schematic top view of a blank stamper 1 according to a first embodiment of the invention. The blank stamper 1 comprises a substantially disc-shaped plate member having an outer perimeter 2 and an inner perimeter 3. The inner perimeter forms an opening in the plate.

Figure 1B is a schematic top view of the stamper according to Fig 1A after structuring. The structured stamper 5 is provided with a plurality of protrusions 7 (schematically indicated with dots on the surface of the stamper in Fig. 1B) on the surface to be facing a cavity in an injection moulding machine. According to another version the structured stamper comprises a plurality of indentations instead of protrusions.

The purpose of the opening formed by inner perimeter 3 is to enable easy installation of the structured stamper 5 into an injection moulding machine having an injection inlet for molten resin in the center of the stamper.

Figure 1C is a schematic sectional side view of a part of the stamper according to Fig 1B. The stamper 5 has a patterned side 6 provided with protrusions 7. These protrusions may form a spiral track, (Fig 1B).

### An embodiment of a method of obtaining a blank stamper means

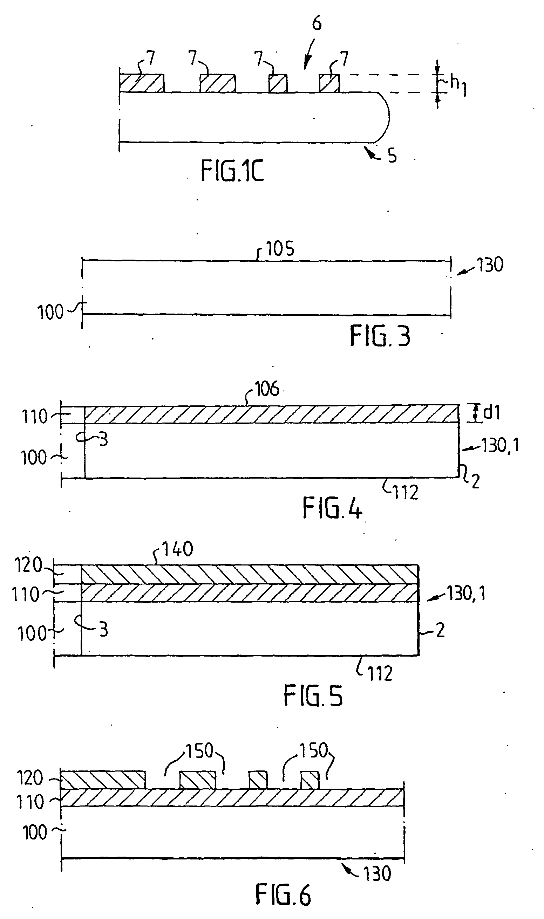

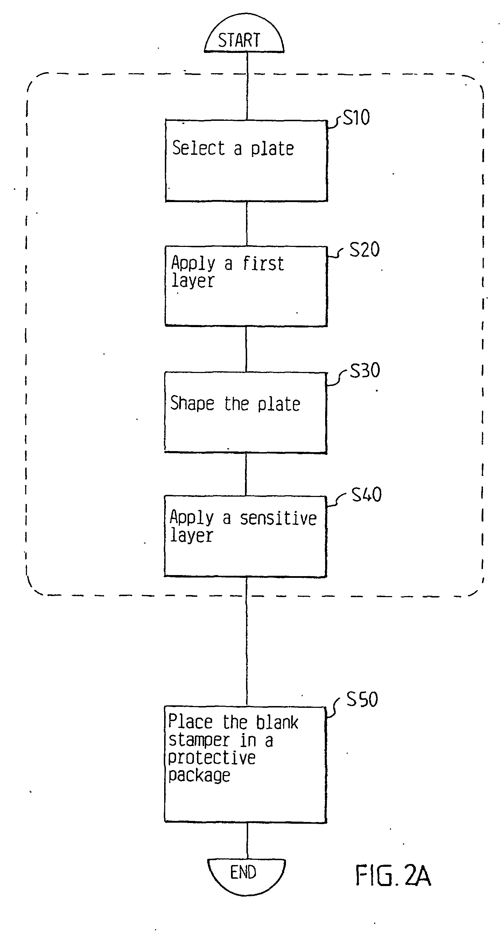

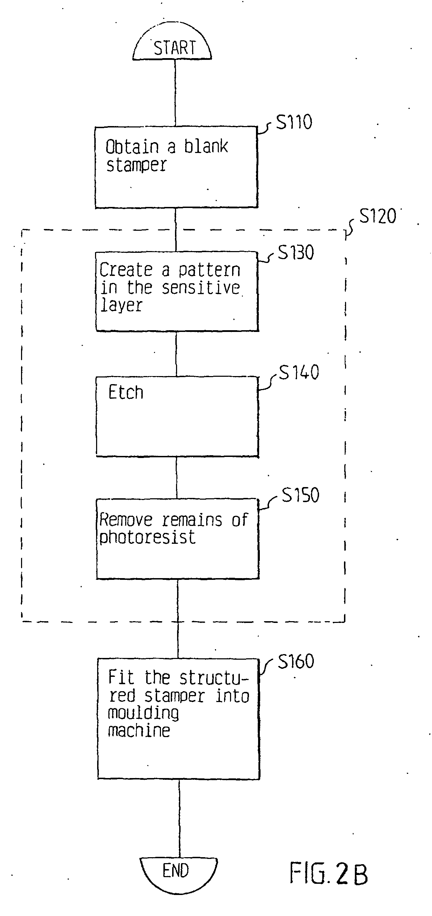

Figure 2A is a flow chart illustrating a process of obtaining a blank stamper according to Figure 1A.

### Step S10

In a first step S10 a workpiece 130 is selected (Fig 3). The workpiece is to be worked into a blank stamper 1.

A suitable workpiece comprises a plate 100 made from a material having a composition suitable for repetitive heat cycling and having a degree of hardness such that wear is minimized when used as a stamper for producing Optical Discs.

The plate 100 (see Figure 3) is, according to an embodiment, a plate of nickel having a flat smooth surface 105. The plate 100 is, according to an embodiment, obtained by electroplating. Thereby an advantageously smooth surface 105 with a substantially glassy finish is provided. Alternatively a plate is treated, e.g. by polishing, such that a sufficiently smooth surface 105 is provided.

### Step S20

In a second process step S20 a first layer 110 (see Figure 4) is provided on the surface 105 of the plate 100. The layer 110 is herein referenced to as a pattern layer, since a pattern is to be provided in the layer 110, as described below. According to an embodiment of the invention the first layer 110 is provided by Physical Vapour Deposition, PVD. According to a preferred embodiment this is achieved by evaporation. According to another embodiment sputtering is used.

The layer 110 is made of a material having a composition different from that of the plate 100 such that the layer 110 and the plate 100 have different sensitivity to a selected etchant. The properties of the layer 110 and the plate 100 are selected such that the layer 110 is etched well whereas the plate 100 is substantially insensitive to the selected etchant.

According to one embodiment the plate 100 comprises nickel, and the first layer 110 consists substantially of titanium nitride. Titanium nitride has the advantageous properties of being depositable by evaporation to a controllable layer thickness, and it stands temperature cycling very well plus it provides a durable surface. The temperature cycling endurance is an important aspect for a stamper since injection moulding involves repetitive heating and cooling.

The first layer 110 can alternatively comprise silicon carbide, silicon nitride or wolfram carbide.

According to an embodiment of the invention the pattern layer 110 is provided with a predetermined layer thickness dl. The thickness d1 corresponds to the desired height of protrusions 7 in the stamper 5 to be achieved. This height d1 should correspond to a depth d2 of the pits of the optical disc to be produced, and the configuration of the protrusions 7 should correspond to the configuration of the individual pits-to-be-obtained. The depth d2 of the pits in an optical disc manufactured with the stamper 5 should be about a quarter of the wave length of the laser used for reading the information from the optical disc.

According to one embodiment of the invention the layer thickness d1 is in the range 0.050 to 0.150 micrometer.

According a preferred embodiment a blank stamper has a pattern layer with a thickness in the range 0.100 to 0.130 micrometer, but preferably thinner than 0.125 micrometer. Such a blank stamper is suitable for transformation into a structured stamper for production of standard CD's.

According to another embodiment a blank stamper has a pattern layer with a thickness in the range 0.090 to 0.110 micrometer, or preferably 0.102 micrometer. Such a blank stamper is suitable for transformation into a structured stamper for production of optical video discs or DVD's.

According to yet another embodiment a blank stamper has a pattern layer 110 with a thickness in the range 0.062 to 0.082 micrometer, or preferably 0.072 micrometer. Such a blank stamper is suitable when the optical-disc-to-be-manufactured is to be used in a CD player having a laser working in the blue light wave length region.

### Step S30

The workpiece 130 is shaped and worked such that its geometry and/or physical properties are suitable for mounting in an injection moulding machine, as illustrated by step S30 in fig 2A.

The opening formed by inner perimeter 3 enables easy installation of the structured stamper 5 into an injection moulding machine having an injection inlet for molten resin in the center of the stamper. When the stamper is used for replicating optical discs, the quality of the resulting moulded discs is optimized when the molten resin is injected in the center of the moulding cavity.

The provision of an inner perimeter 3 in the blank stamper has the advantage of eliminating the need for the end user of the stamper (i.e. the manufacturer of optical discs) to have the bulky machinery necessary for punching out an opening in the stampers.

According to a preferred embodiment the workpiece is punched so as to provide a substantially circular inner perimeter 3 (Fig. 1A) of the blank stamper before placing it in a protective package. The punching is performed such that deformation of the workpiece is avoided. In addition to providing an inner perimeter 3, the blank stamper is preferably punched to obtain an outer perimeter 2 of a predetermined diameter such that the blank stamper fits in an injection moulding machine. The outer and inner perimeters are circular and concentric within narrow manufacturing tolerances.

The resulting workpiece (Fig 4) has a surface 106, an outer perimeter 2, an inner perimeter 3 and a back surface 112. According to a preferred embodiment the workpiece is a substantially stressfree, disc-shaped plate having a thickness of in the range 250 to 350 micrometer, preferably 300 micrometer. The surface 106 is structurable, but substantially unstructured.

The quality of the surface 112 is of importance since the stamper-to-be must be substantially flat during the injecting moulding procedure. Due to the relatively small thickness of the stamper, the avoidance of surface irregularities of the back surface 112 are of great importance, since large surface irregularities may cause bulging of the stamper when mounted against a flat plane surface in the injection moulding machine and the high pressure in the moulding cavity during moulding presses the stamper against the flat plane machine surface. Such bulging would, in turn, lead to inferior quality of the resulting moulded product.

For these reasons the step S30 also includes treatment of the surface 112 such that surface irregularities are minimized. This treatment includes polishing according to one version of the invention.

Surface irregularities are measured in standardized manners, such as according to DIN 4768 defining a mean surface deviation R_{z}. The mean surface deviation R_{z} provides a measure of the average deviation in a direction perpendicular to the plane of the surface. According to an embodiment the surface 112 is treated to obtain a mean surface deviation value R_{z} below 2,0 micrometer, since inferior quality of replicated optical disks is obtained when the mean surface deviation value R_{z} exceeds 2,0 micrometer. According to a preferred embodiment the mean surface deviation R_{z} of surface 112 after treatment is less than 1,0 micrometer.

The maximum surface deviation Rₘₐₓ is measured according to DIN 4768, and according to one embodiment the maximum surface deviation value Rₘₐₓ is below 3,0 micrometer for the treated surface 112. According to a preferred embodiment Rₘₐₓ has a value below 1,3 micrometer.

The arithmetic average deviation Rₐ is the arithmetic mean value of all distances from the surface profile to a mean surface line, each distance being measured perpendicularly to the mean surface line. The arithmetic average deviation Rₐ is obtained by evaluation of the surface 112 along an evaluation line. According to an embodiment of the invention the back surface is treated so as to obtain an arithmetic average surface deviation value Rₐ below 0,3 micrometer or at least below 0,5 micrometer. According to a preferred embodiment Rₐ has a value below 0.1 micrometer for the treated surface 112.

Since it is an object of the present invention to simplify the procedure for the Manufacturer of Optical Discs, the treatment of the back surface 112 should preferably be executed on the blank stamper before structuring it. Furthermore, it to be noted that every step in the treatment of a stamper has a rejection ratio, i.e. statistically a certain portion of the articles will fail the quality requirements after the treatment step. For these reasons it is advantageous to perform the treatment of the back surface on the blank stamper 1 before structuring it.

### Step S40

In a step S40 a layer 120, sensitive to irradiation is applied on the first layer 110 (see Figure 5). The sensitive layer 120 is spin coated onto the surface 106 to a substantially even thickness. The term "sensitive layer" used in this text comprises sensitivity to electron beams as well as sensitivity to laser exposure. The sensitive layer is, in one version of the invention, a photosensitive resist film, i.e. a photoresist.

The sensitive layer may be applied in the form of a liquid, by spin coating. Thereafter it is baked so that a suitable amount of solvent evaporates, rendering a solid, non-liquid, film.

The irradiation sensitivity of layer 120 is not limited to the above examples, but can be sensitivity to beams or rays of other irradiation such as for example X-rays or ultraviolet rays.

The sensitive layer may be sensitive in a positive manner or in a negative manner. When a positively sensitive layer is used the exposed areas are removed by the development process, described with reference to Fig. 2B below. Conversely, when a negatively sensitive layer is used the unexposed areas are removed by the development process.

The workpiece resulting from step S40 ( Fig 5) has a front surface 140, an outer edge and a back surface 112, the front surface 140 being structurable, but substantially unstructured. The workpiece is shaped and adapted such that the only remaining processing, for obtaining a structured stamper ready for installation in an injection moulding machine, is structuring the pattern layer 110, e.g. by exposing and developing the sensitive layer 120 and etching the pattern layer.

### Step S50

The blank stamper 1 resulting from step S30 or S40 is inspected. Any blank stamper which does not reach sufficient quality will be rejected. The specimen which pass the inspection are placed in a package for enabling transport to an end user while preserving the properties of the surfaces and/or the unexposed condition of the sensitive layer 120, as discussed in more detail below.

### Blank Stamper Embodiments

According to a preferred embodiment, the blank stamper 1 shown in Fig 1A has a cross-section as shown in Fig. 5. The blank stamper 1 is provided with a substantially circular outer perimeter 2 and an inner circular perimeter 3 of a smaller diameter (Fig. 1A). The surface 140 is structurable, but substantially unstructured.

According to another embodiment the blank stamper 1 has a cross-section as illustrated in Fig. 4, i.e. the blank stamper is a two-layered member without any sensitive layer, shaped for fitting into an injection moulding machine. It has a surface 106, an outer perimeter 2, an inner perimeter 3 and a back surface 112 (Fig 4). According to a preferred embodiment the workpiece is a substantially stressfree, disc-shaped plate having a thickness of in the range 250 to 350 micrometer, preferably 300 micrometer. The surface 106 is structurable, but substantially unstructured.

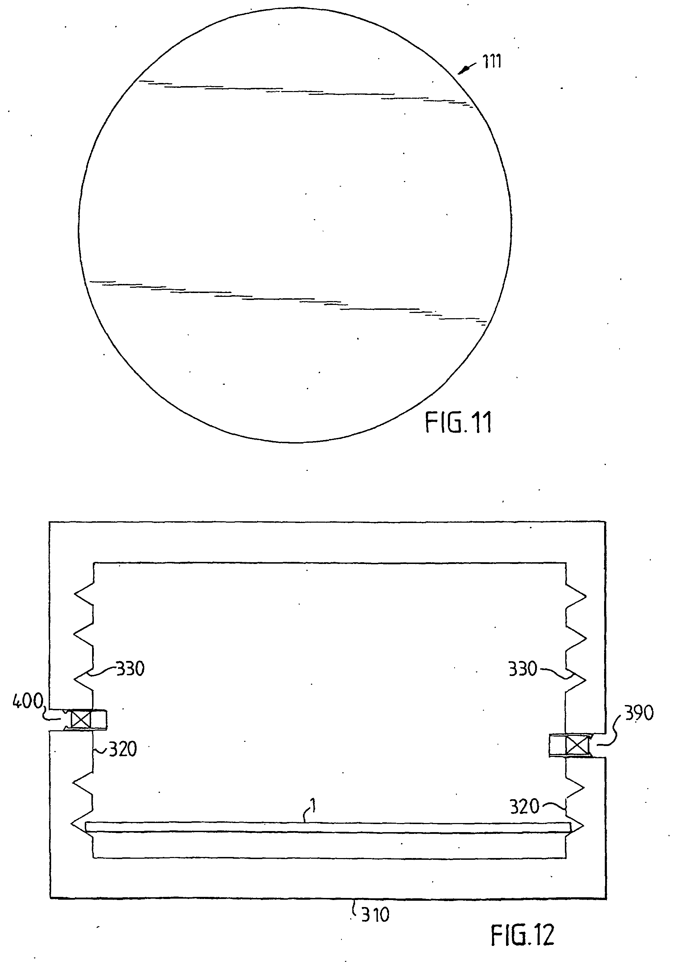

Yet another embodiment of a blank stamper is shown in Fig 11. The blank stamper has an outer perimeter of a predetermined measure so as to fit into a standardized package, and a back surface 112 which has been treated such that surface irregularities are minimized, as defined above. This blank stamper embodiment is, however not provided with any inner perimeter. Instead the blank is of a size large enough to allow a Manufacturer of Optical discs to provide the blank with a selectable inner and outer diameter. The blank stamper shown in Fig 11 is providable for example with a cross-section as illustrated in Fig 5, Fig 4 or Fig 9.

According to another embodiment the plate of nickel having a flat smooth surface 105 is first polished to obtain a smooth back surface 112 as described above. Thereafter the flat smooth surface 105 is provided with a negatively acting sensitive film in the form of a photoresist, e.g. AZ RAY-PRO by Hoechst. The negatively acting sensitive film is dried, and thereafter an inner perimeter is punched in the plate. This blank stamper embodiment is placed in a protective package, as described below. In order to obtain a structured stamper, this blank stamper embodiment is advantageously structured by structuring the sensitive film.

Further embodiments of a blank stamper are shown in Figures 15, 16 and 17.

### A Further Embodiment of a Method of Manufacturing a Blank Stamper

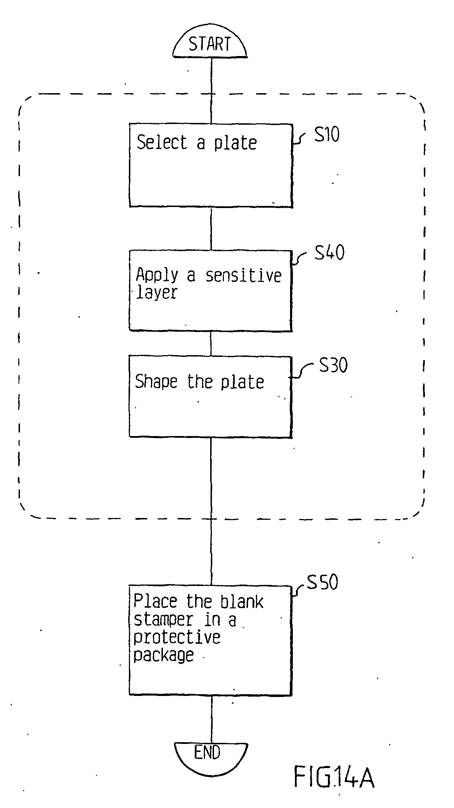

Figure 14A illustrates an embodiment of a process of obtaining a blank stamper as shown in Figures 15, 16 and 17. In a first step S10 a suitable plate is selected, as discussed in connection with Figure 3 above. Thereafter an exposable layer 120 is applied on the plate surface 105 (step S40), and the plate is shaped and worked such that its geometry and physical properties are suitable for mounting in an injection moulding machine (S30).

The step of applying an exposable layer 120 is made in the same way as discussed in detail above in connection with Fig 2A, except that according to the Fig 14A embodiment the layer 120 is applied directly on the surface 105 of the plate 100. The exposable layer 120 is sensitive to irradiation, and is applied for the purpose of achieving a mask film.

The step S40 according to the Fig 14A embodiment is made in the same way as discussed in detail above in connection with Fig 2A, except that according to the Fig 14A embodiment the workpiece 130 consists of plate 100 having surface 105 and surface 112.

Step S30 is performed before step S40 according to one version of the process.

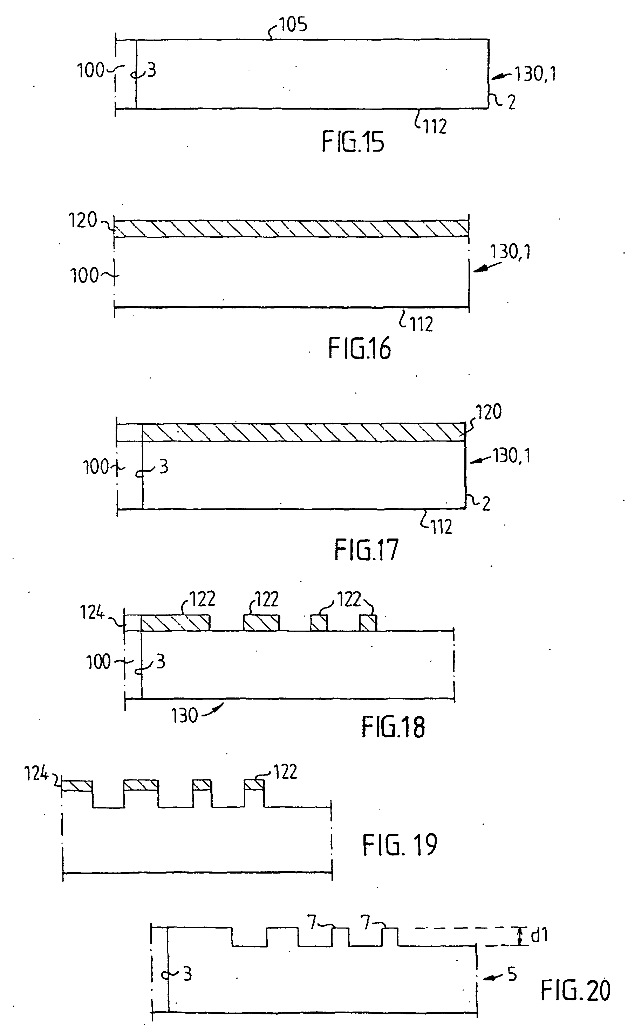

Preferably, however, step S40 is performed before step S30 since this order of performing the steps enables a more uniform thickness of the layer 120. This is because (with reference to Fig 15 and 16) the thickness of layer 120 may become uneven near the inner edge 3 e.g. when applied by spin-coating, and therefore it is advantageous to punch out the opening to provide the final inner perimeter only after the layer 120 has been applied and dried. More particularly, the material for forming layer 120 is poured onto the surface 105 of a spinning blank stamper plate, according to an embodiment of the invention. When the liquid is poured near the rotational centre of the stamper plate the liquid spreads towards the outer perimeter of the plate. Any thickness irregularities near the centre of the plate will be concentrated in the central portion of the plate which is removed when the inner perimeter 3 is obtained, e.g. by punching.

Figure 15 is a schematic sectional side view of a blank stamper 1 as shown in Figure 3, after shaping it for fitting with an injection moulding machine, i.e. after performing step S30. According to one version of the invention the blank stamper 1 as illustrated in Fig 15 is placed in a protective package for delivery without performing step S40.

Figure 16 is a schematic sectional side view of an embodiment of a blank stamper including a layer 120 sensitive to irradiation, but before shaping it for fitting with an injection moulding machine, i.e. before performing step S30.

Figure 17 is a schematic sectional side view of a blank stamper means shown in Figure 16, after shaping it for fitting with an injection moulding machine i.e. after step S30.

### Transporting a blank stamper

The layer 120 being sensitive to irradiation, presents the problem of enabling transport of the blank stamper 1 without damaging it.

For the purpose of preventing unwanted exposure of the layer 120 the blank stamper 1 according to Fig. 5, Fig. 16 or Fig. 17 is placed in a protective package, as illustrated by step S50 in Fig 2A and fig 14A. The package comprises walls designed to prevent external irradiation from penetrating into a stored stamper.

The blank stamper shown in Fig. 4 has vulnerable surfaces 106 and 112, both of which must be protected from scratching during transport. Advantageously, according to the invention, the blank stamper is stored in a package devised to hold a plurality of blanks 1 such that each stamper surface 106, 112 is protected from being damaged. Likewise the blank stamper shown in Fig 15 has sensitive surfaces 105 and 112. A suitable package is illustrated in Fig 12.

Fig 12 is a sectional top view of a package 300 for a plurality of blank stampers 1. The package comprises a housing 310 having inner walls 320. Two opposing inner walls 320 are provided at a predetermined distance from each other, and the walls are provided with shaped portions 330 for holding a blank stampers having an outer perimeter of a predetermined measure. The shaped portions are grooves adapted for allowing insertion of a blank stamper.

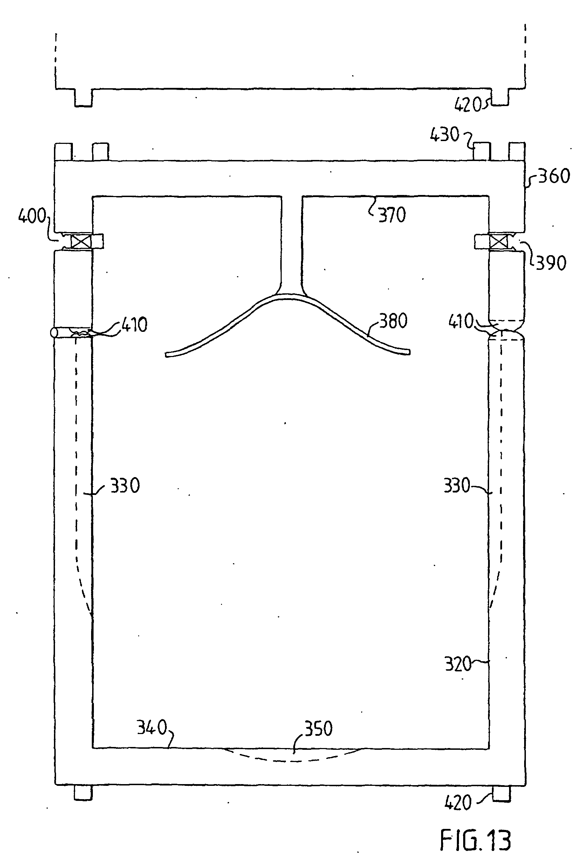

Fig 13 is a sectional side view of the package shown in Fig 12. The package has an inner bottom wall 340 provided with recesses 350 adapted for receiving blank stampers. An openable/closable lid 360 has an inner wall 370 having means 380 for urging a stored stamper towards a corresponding recess 350.

According to one version of the package, there is provided an inlet 390 for an anti-oxidant, such as nitrogen. For the purpose of enabling efficient filling of anti-oxidant there is also provided an outlet 400 so that a gas flow through the package can be obtained. The inlet and the outlet are provided with closable valves. The package is sealable by means of sealing means 410. The sealing means 410 includes a rubber strip seal, according to an embodiment.

According to an embodiment the package is air tight and, when closed, it prevents light from reaching the enclosed blank stampers. Since the package is air tight any solvent remaining in the unexposed sensitive film will only evaporate until there is a balance of concentration of solvent in the unexposed sensitive film and in the gas-filled space inside the package. This ensures a long stability of the unexposed sensitive film. Hence a long shelf-life for the blank stampers is ensured.

The provision of blank stampers in a package has the advantage of enabling the manufacturer of optical discs to acquire blanks which are easily transformed into structured stampers ready for use in an injection moulding machine.

### A procedure of obtaining a structured stamper

Figure 2B is a flow chart illustrating a process of obtaining a structured stamper as illustrated in Figure 1B and 1C.

### Step S110

The method includes obtaining a blank stamper, as illustrated by step S110 in Fig 2B. The acquisition of a blank stamper 1 may include unpacking a blank stamper 1 from the package in which it was placed by the supplier, as described in connection with Figure 2A (and 14A) above. According to another embodiment of the invention step S110 includes at least steps S10, S40 and S30.

### Step S120

Thereafter, in step S120, a pattern of protrusions 7 is created in the pattern layer 110, which yields the desired structured stamper 5 (see Figure 2B and 1). Alternatively a pattern of indentations are created in the layer 110.

### Step S160

After structuring the blank stamper 1, the resulting structured stamper is ready to be fitted into an injection moulding machine (S160)

As illustrated in Figure 2B, the pattern creating step S120 involves only a very limited number of steps to be performed. This explained in detail below.

### Step S130

First, in a step S130 (Figure 2B), a pattern is created in the sensitive layer 120. This may be achieved by setting the blank 1 shown in Figures 1 and 5 in an exposure device, where a modulated laser beam is controlled to radiate parts of the surface 140 of the photosensitive layer 120. In this manner a pattern of rounded and elongate surface areas are left unexposed on the workpiece 130. The pattern may include a spiral track of such exposed areas on the photosensitive layer 120.

Once the data pattern has been exposed onto the photosensitive layer, the blank stamper 1 is developed, i.e. the blank stamper 1 is treated such that the exposed areas of the sensitive layer 120 are removed. This may be achieved by placing the blank stamper 1 in developing solution. After the development step the sensitive layer 120 has indentations exposing surface parts 150 of the first layer 110, as shown in Figure 6. At this stage the exposed blank 1 may be better termed to be a semi-manufactured stamper 1.

### Step S140

In a subsequent step S140 (Figure 2B) the semi-manufactured stamper 1 (see Figure 6) is treated in an etch process. Etching may be performed in a variety of different manners. It can for example be performed by dry etching methods or by use of a liquid etchant.

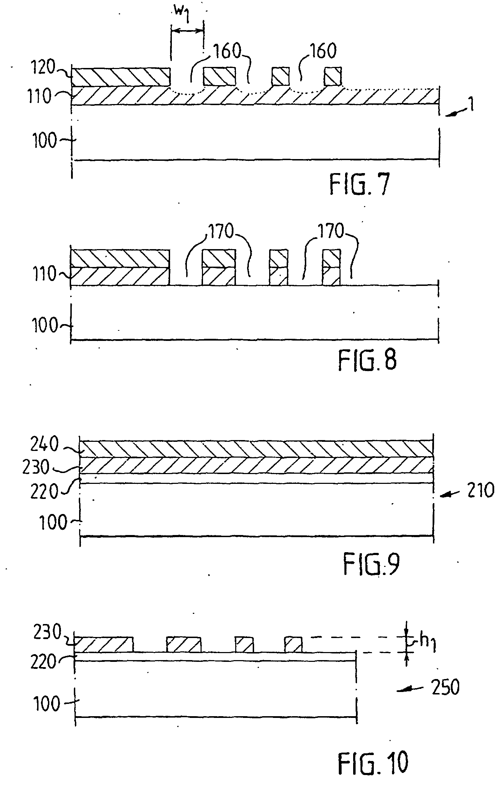

When etching with use of liquid etchant the semi-manufactured stamper 1 is placed in a bath with a liquid which reacts with the material at the exposed surface parts 150 of the first layer 110, and thus indentations 160 in the first layer 110 are generated (see Figure 7).

The etching process is controlled such that the etching causes indentations 160 in the first layer 110 having substantially the same width W₁ as the width of the openings in the sensitive layer 120 (see Figure 7).

According to one embodiment the plate 100 comprises nickel, and the first layer 110 consists substantially of titanium nitride. The etching liquid used in the etch process S60 is selected such that it acts on the first layer 110 but not on the plate 100. Hence the indentations 160 will reach through the first layer 110 and expose portions 170 of the surface 105 of plate 100, as illustrated in Figure 8.

### Step S150

In a subsequent step S150 (Figure 2B) the remaining portions of the sensitive layer 120 is removed, yielding a stamper surface with a pattern of protrusions 7, as illustrated in Figure 1C and 1B.

Since the thickness d1 of the layer 110 is predetermined, by process step S20, and the plate 100 is not etchable by the etching solution the depth of the indentations is substantially independent on the etching variables.

Thus, the height h₁ of the protrusions in the stamper 5 are provided with an advantageously high accuracy, thereby enabling the production of high quality Optical Discs having a high accuracy as regards the depth of the pits.

Hence, a manufacturer of optical discs having an amount of information-to-be-replicated, such as for example a music recording or computer data, can advantageously acquire a package of blank stampers and, using the relatively simple method illustrated in Fig 2B, provide the desired structure thereon.

After structuring the blank stamper 1, the resulting structured stamper is ready to be fitted into an injection moulding machine (S160).

### A Further Embodiment of a Blank Stamper

Figure 9 is a schematic sectional side view of a part of a blank stamper 210 according to a second embodiment of the invention.

The blank stamper 210 includes a plate 100 consisting substantially of nickel, and having a flat smooth surface on which an etch-stop layer 220 is provided. The etch-stop layer may consist essentially of gold provided as a tight skin for preventing an etch solution from reaching the plate 100 during the transformation of the blank stamper 210 into a structured stamper.

Another layer 230 is provided on the etch-stop layer 220. The layer 230 in the blank stamper 210 corresponds to the pattern layer 110 in the blank stamper 1 shown in Figure 5.

According to a preferred embodiment the disc-shaped multilayer member comprises a nickel plate 100, and layers 220, 230 . The disc-shaped multilayer member is substantially stressfree having a thickness in the range 250 to 350 micrometer, preferably 300 micrometer. The layer 230 is structurable, but substantially unstructured. The layer 230 has a thickness corresponding to a depth of pits-to-be-formed in an optical disc.

According to one version of blank stamper 210, the layer 230 consists essentially of chromium. A layer 240 sensitive to irradiation is provided over the layer 230.

The blank stamper 210 is transformable into a structured stamper by means of the advantageously simple method described with reference to Fig. 2B above. The etch step S140 is modified in that the selection of etch liquids is adapted for etching chromium. According to a preferred embodiment the etching for chromium is a mixture of Ce(SO₄)₂ X 2(NH₄)2SO₄ X 2H₂O and HClO₄ X H₂O.

Figure 10 is a sectional side view of a portion of a structured stamper 250 obtained from a blank stamper 210.

### A Further Embodiment of a Process of Obtaining a Structured Stamper

According to a further embodiment of the process the general process steps S110, and S160 remain as disclosed above in connection with Figure 2B, but step S120 is modified to include ion machining, reactive ion etching, ion milling, plasma etching or the like. Such treatment is herein referred to as ion etching.

The treatment methods named above are known methods within the art of surface structuring and therefore no detailed discussion of these will be included here.

The ion etching process gives a depth in the etched areas corresponding to a time parameter. The process also depends on gas pressure and other technical parameters which can be determined by the man skilled in the art without any inventive activity. Thus, after determination of the technical parameter values to be used, such as e.g. gas pressure, type of gas and/or ions/plasma, voltage etc. the depth of the etched areas is dependent on the duration of the ion etching process i.e. the time parameter.

According to an embodiment of the invention the ion etching is continued until a depth d1 is reached. This depth d1 corresponds to the desired height of protrusions 7 in the stamper 5 to be achieved (Fig 20). This height d1 should correspond to a depth d2 of the pits of the optical disc to be produced, and the configuration of the protrusions 7 should correspond to the configuration of the individual pits-to-be-obtained. The depth d2 of the pits in an optical disc manufactured with the stamper 5 should be about a quarter of the wave length of the laser used for reading the information from the optical disc.

Figure 18 is a schematic sectional side view of a blank stamper 1 shown in Figure 17, after recording and developing an information pattern in the mask film layer 120. An information pattern has been recorded into the mask film 120, and cured portions 122 remain. The cured portions 122 correspond to positions on the stamper means 1 where pattern protrusions and land areas are to be provided. Hence, the cured portions 122 together form a mask film 124.

The ion etching process will leave land areas corresponding to the areas where the mask 124 is present and will remove material where there is no photoresist present thus giving the plate a structured surface, as illustrated in Fig 20.

Figure 19 is a schematic sectional side view of a blank stamper means shown in Figure 18, after subjecting it to ion etching. The ion etching process wears not only on the stamper metal, but also affects the cured mask portions 122 such that they become thinner. This is illustrated by indicating thinner portions 122 in Fig 19 than in Fig 18.

Figure 20 is a schematic sectional side view of a structured stamper shown in Figure 19, after removing any remaining portions of the cured mask portions 122.

Optical disc replicas are produced in an efficient manner as follows: A manufacturer of-optical-disks receives a semi-manufactured stamper enclosed in a package;and removes the semi-manufactured stamper from the package. A structured stamper is obtained by exposing the sensitive layer so as to record an information pattern; and structuring said first surface or said sensitive layer in accordance with the recorded pattern such that a structured stamper is obtained. The structured stamper is fixed in a mould. Replicas are produced by injecting a resin into the mould to form a replica of the structured stamper such that the structure in said replica is a mirror image of the stamper structure, and by removing the replica from the mould.

## Claims

1. A method of providing a semi-manufactured stamper,
the method comprising the steps of:
a) selecting a substantially disc-shaped member (100) having a substantially flat first surface (105; 106), and a second surface (112) forming a back surface of the semi-manufactured stamper; said first surface being structurable and substantially unstructured; **characterized by the steps of:**
b) applying a layer (160; 240; 260) sensitive to irradiation on said first surface (105) such that an unexposed and exposable semi-manufactured stamper is provided;
c) enclosing (S50) the unexposed semi-manufactured stamper in a protective package such that the sensitive film is maintained substantially unexposed; and
d) treating (S30) the semi-manufactured stamper, before performing step c), said treatment including:
d1) treating said second surface (112) of the semi-manufactured stamper such that a mean surface deviation value (R_{z}) below 2 micrometer is obtained.

2. A method of providing a semi-manufactured stamper, the method comprising the steps of:
a) selecting a substantially disc-shaped member (100) having a substantially flat first surface (105; 106), and a second surface (112) forming a back surface of the semi-manufactured stamper; said first surface being structurable and substantially unstructured; **characterized by the steps of:**
b) applying a layer (160; 240; 260) sensitive to irradiation on said first surface (105) such that an unexposed and exposable semi-manufactured stamper is provided;
c) enclosing (S50) the unexposed semi-manufactured stamper in a protective package such that the sensitive film is maintained substantially unexposed; and
d) treating (S30) the semi-manufactured stamper, before performing step c), said treatment including:
d2) shaping (S30) an inner perimeter of the semi-manufactured stamper.

3. A method of providing a semi-manufactured stamper, the method comprising the steps of:
a) selecting a substantially disc-shaped member (100) having a substantially flat first surface (105; 106), and a second surface (112) forming a back surface of the semi-manufactured stamper; said first surface being structurable and substantially unstructured; **characterized by the steps of:**
b) applying a layer (160; 240; 260) sensitive to irradiation on said first surface (105) such that an unexposed and exposable semi-manufactured stamper is provided;
c) enclosing (S50) the unexposed semi-manufactured stamper in a protective package such that the sensitive film is maintained substantially unexposed; and
d) treating (S30) the semi-manufactured stamper, before performing step c), such that it geometrically fits in a mould of an injection moulding machine; said treatment including:
d2) shaping (S30) an inner perimeter of the semi-manufactured stamper; and
d3) shaping an outer perimeter of the semi-manufactured stamper such that said perimeters are substantially circular and substantially concentric.

4. The method according to claim 2 or 3, wherein said treatment includes:
d1) treating said second surface (112) of the semi-manufactured stamper such that a mean surface deviation value (R_{z}) below 2 micrometer is obtained.

5. The method according to claim 1, wherein said treatment includes:
d2) shaping (S30) an inner perimeter of the semi-manufactured stamper.

6. The method according to claim 2 or 5, wherein said treatment includes:
d3) shaping an outer perimeter of the semi-manufactured stamper such that said perimeters are substantially circular and substantially concentric.

7. The method according to claim 2, 5 or 6, wherein said inner perimeter of the semi-manufactured stamper is shaped (S30) by punching after the application of said irradiation sensitive layer (160; 240; 260).

8. The method according to claim 1,4 or 5, wherein
said treatment includes polishing.

9. The method according to claim 1,4,5 or 8 wherein
said treatment includes polishing said second surface (112) so as to obtain a maximum surface deviation value (Rₘₐₓ) below 3 micrometer.

10. The method according to any of the preceding claims, wherein
said disc-shaped member (100) is made of metal.

11. The method according to any of the preceding claims, further comprising the step of providing a metal layer (110; 230) on at least a portion of the flat surface (105) of the disc-shaped member (100).

12. The method according to claim 11, wherein said sensitive layer is applied on the surface (106) of the metal layer (110; 230).

13. The method according to claim 11 or 12, wherein
the metal layer (110) comprises titanium nitride

14. The method according to any of claims 1- 13, further comprising the steps of:
providing an etch-stop layer (220) on said surface (105) of the member (100);
providing a further layer (230) on the etch-stop layer (220), said further layer comprising a first material which is well etchable by a certain etchant;
the etch-stop layer comprising a material being less etchable by said etchant.

15. A process of manufacturing an optical disc replica, comprising the steps of:
receiving a semi-manufactured stamper enclosed in a package and obtained by the method according to any of claims 1 - 14;
removing said semi-manufactured stamper from said package;
exposing the sensitive layer (160; 240; 260) so as to record an information pattern; and
structuring said first surface in accordance with the recorded pattern such that a structured stamper is obtained;
fixing said structured stamper in a mould;
injecting a resin into said mould to form a replica of said structured stamper such that the structure in said replica is a mirror image of the stamper structure;
removing said replica from said mould.

16. A kit of parts, comprising:
a semi-manufactured stamper, and
a protective package;
said semi-manufactured stamper having:
a) a substantially disc-shaped member (100) having a substantially flat first surface (105; 106), and a second surface (112) forming a back surface of the semi-manufactured stamper; said first surface being structurable and substantially unstructured;
b) at least a part of said first surface (105) is covered by a layer (160; 240; 260) sensitive to irradiation such that said member (100) constitutes an unexposed and exposable semi-manufactured stamper;
d1) said second surface (112) having a mean surface deviation value (R_{z}) below 2 micrometer; and
d2) said semi-manufactured stamper having an inner perimeter;
wherein said protective package encloses said semi-manufactured stamper such that the sensitive film is maintained substantially unexposed.

17. The kit according to claim 16, wherein
the package comprises means for preventing external irradiation from reaching an enclosed stamper means.

18. The kit according to claim 16 or 17, wherein
the package is sealable; the package, when sealed, being adapted for holding an anti-oxidant.

19. A method of obtaining a structured stamper, the method comprising the steps of:
receiving a protective package containing at least one semi-manufactured stamper having:
a) a substantially disc-shaped member (100) having a substantially flat first surface (105; 106), and a second surface (112) forming a back surface of the semi-manufactured stamper; said first surface being structurable and substantially unstructured;
b) at least a part of said first surface (105) is covered by a layer (160; 240; 260) sensitive to irradiation such that said member (100) constitutes an unexposed and exposable semi-manufactured stamper;
d1) said second surface (112) having a mean surface deviation value (R_{z}) below 2 micrometer; and
d2) said semi-manufactured stamper having an inner perimeter; the method further comprising the steps of:
exposing the sensitive layer (160; 240; 260) so as to record an information pattern; and
structuring said first surface in accordance with the recorded pattern such that a structured stamper is obtained.

20. The method according to claim 19, wherein said structuring step includes:
creating a pattern of indentations in the photosensitive layer;
subjecting the semi-manufactured stamper to an etch process such that a pattern of indentations is obtained in the first surface (105; 106) of the disc-shaped member (110; 230), the pattern in the first surface (105; 106; 110; 230) corresponding to the pattern in the photosensitive layer.

## Patentansprüche

1. Verfahren zum Bereitstellen eines Halbfertigstempels, mit folgenden Schritten:
a) Auswählen eines im Wesentlichen scheibenförmigen Elements (100), das eine im Wesentlichen flache erste Oberfläche (105; 106) und eine eine Rückfläche des Halbfertigstempels bildende zweite Oberfläche (112) aufweist, wobei die erste Oberfläche strukturierbar und im Wesentlichen unstrukturiert ist, **gekennzeichnet durch die Schritte:**
b) derartiges Aufbringen einer strahlungsempfindlichen Lage (160; 240; 260) auf die erste Oberfläche (105), dass ein unbelichteter und belichtbarer Halbfertigstempel bereitgestellt wird;
c) derartiges Einschließen (S50) des unbelichteten Halbfertigstempels in einer Schutzpackung, dass der empfindliche Film im Wesentlichen unbelichtet erhalten bleibt; und
d) Behandeln (S30) des Halbfertigstempels vor dem Ausführen des Schritts c), wobei das Behandeln umfasst:
d1) Behandeln der zweiten Oberfläche (11) des Halbfertigstempels derart, dass ein Durchschnittsoberflächenabweichungswert (R_{z}) unter 2 Mikrometer erhalten wird.

2. Verfahren zum Bereitstellen eines Halbfertigstempels, mit folgenden Schritten:
a) Auswählen eines im Wesentlichen scheibenförmigen Elements (100), das eine im Wesentlichen flache erste Oberfläche (105; 106) und eine eine Rückfläche des Halbfertigstempels bildende zweite Oberfläche (112) aufweist, wobei die erste Oberfläche strukturierbar und im Wesentlichen unstrukturiert ist, **gekennzeichnet durch die Schritte:**
b) derartiges Aufbringen einer strahlungsempfindlichen Lage (160; 240; 260) auf die erste Oberfläche (105), dass ein unbelichteter und belichtbarer Halbfertigstempel bereitgestellt ist;
c) derartiges Einschließen (S50) des unbelichteten Halbfertigstempels in einer Schutzpackung, dass der empfindliche Film im Wesentlichen unbelichtet erhalten wirkt; und
d) Behandeln (S30) des Halbfertigstempels vor dem Ausführen des Schritts c), wobei das Behandeln umfasst:
d2) Formen (S30) eines Innenrands des Halbfertigstempels.

3. Verfahren zum Bereitstellen eines Halbfertigstempels, mit folgenden Schritten:
a) Auswählen eines im Wesentlichen scheibenförmigen Elements (100), das eine im Wesentlichen flache erste Oberfläche (105; 106) und eine eine Rückfläche des Halbfertigstempels bildende zweite Oberfläche (112) aufweist, wobei die erste Oberfläche strukturierbar und im Wesentlichen unstrukturiert ist, **gekennzeichnet durch die Schritte:**
b) derartiges Aufbringen einer strahlungsempfindlichen Lage (160; 240; 260) auf die erste Oberfläche (105), dass ein unbelichteter und belichtbarer Halbfertigstempel bereitgestellt ist;
c) derartiges Einschließen (S50) des unbelichteten Halbfertigstempels in einer Schutzpackung, dass der empfindliche Film im Wesentlichen unbelichtet erhalten wirkt; und
d) derartiges Behandeln (S30) des Halbfertigstempels vor dem Ausführen von Schritt c), dass er geometrisch in eine Form einer Spritzgießmaschine passt, und das Behandeln umfasst:
d2) Formen (S30) eines Innenrands des Halbfertigstempels; und
d3) derartiges Formen eines Außenrands des Halbfertigstempels, dass die Ränder im Wesentlichen kreisförmig und im Wesentlichen konzentrisch sind.

4. Verfahren nach Anspruch 2 oder 3, **dadurch gekennzeichnet, dass** das Behandeln umfasst:
d1) Behandeln der zweiten Oberfläche (112) des Halbfertigstempels derart, dass ein Durchschnittsoberflächenabweichungswert (R_{z}) unter 2 Mikrometer erhalten wird.

5. Verfahren nach Anspruch 1, **dadurch gekennzeichnet, dass** das Behandeln umfasst:
d2) Formen (S30) eines Innenrands des Halbfertigstempels.

6. Verfahren nach Anspruch 2 oder 5, **dadurch gekennzeichnet, dass** das Behandeln umfasst:
d3) derartiges Formen eines Außenrands des Halbfertigstempels, dass die Ränder im Wesentlichen kreisförmig und im Wesentlichen konzentrisch sind.

7. Verfahren nach Anspruch 2, 5 oder 6, **dadurch gekennzeichnet, dass** der Innenrand des Halbfertigstempels nach dem Aufbringen der strahlungsempfindlichen Lage (160; 240; 260) durch Stanzen geformt (S30) wird.

8. Verfahren nach Anspruch 1, 4 oder 5, **dadurch gekennzeichnet, dass** das Behandeln Polieren umfasst.

9. Verfahren nach Anspruch 1 4, 5 oder 8, **dadurch gekennzeichnet, dass** das Behandeln das derartige Polieren der zweiten Oberfläche (112) umfasst, dass ein maximaler Oberflächenabweichungswert (Rₘₐₓ) unter 3 Mikrometer erzielt wird.

10. Verfahren nach einem der vorhergehenden Ansprüche, **dadurch gekennzeichnet, dass** das scheibenförmige Element (100) aus Metall hergestellt ist.

11. Verfahren nach einem der vorhergehenden Ansprüche, weiterhin den Schritt des Bereitstellens einer Metalllage (110; 230) auf zumindest einem Bereich der flachen Oberfläche (105) des scheibenförmigen Elements (100) umfassend.

12. Verfahren nach Anspruch 11, **dadurch gekennzeichnet, dass** die empfindliche Lage auf die Oberfläche (106) der Metalllage (110; 230) aufgebracht wird.

13. Verfahren nach Anspruch 11 oder 12, **dadurch gekennzeichnet, dass** die Metalllage (110) Titaniumnitrid umfasst.

14. Verfahren nach einem der Ansprüche 1 bis 13, weiterhin folgende Schritte umfassend:
Bereitstellen einer Ätzsperrlage (220) auf der Oberfläche (105) des Elements (100);
Bereitstellen einer weiteren Lage (230) auf der Ätzsperrlage (220), wobei die weitere Lage einen ersten Werkstoff umfasst, der durch ein bestimmtes Ätzmittel gut ätzbar ist; und
die Ätzsperrlage einen Werkstoff umfasst, der durch das Ätzmittel weniger ätzbar ist.

15. Verfahren zum Herstellen einer Nachbildung einer optischen Scheibe, mit folgenden Schritten:
Empfangen eines in einer Packung eingeschlossenen und durch das Verfahren gemäß einem der Ansprüche 1 bis 14 erhaltenen Halbfertigstempels;
Entfernen des Halbfertigstempels aus der Packung;
derartiges Belichten der empfindlichen Lage (160; 240; 260), dass ein Informationsmuster aufgezeichnet wird; und
Strukturieren der ersten Oberfläche gemäß des aufgezeichneten Musters derart, dass ein strukturierter Stempel erzielt wird;
Befestigen des strukturierten Stempels in einer Form; Einspritzen eines Harzes in die Form, um eine Nachbildung des strukturierten Stempels derart zu bilden, dass die Struktur in der Nachbildung ein Spiegelbild der Stempelstruktur ist;
Entfernen der Nachbildung aus der Form.

16. Einzelteilzusammenstellung, umfassend:
einen Halbfertigstempel; und
eine Schutzpackung;
bei der der Halbfertigstempel aufweist:
a) ein im Wesentlichen scheibenförmiges Element (100), das eine im Wesentlichen flache erste Oberfläche (105; 106) und eine eine Rückfläche des Halbfertigstempels bildende zweite Oberfläche (112) aufweist; die erste Oberfläche strukturierbar und im Wesentlichen unstrukturiert ist;
b) die erste Oberfläche (105) zumindest bereichsweise von einer strahlungsempfindlichen Lage (160; 240; 260) derart bedeckt ist, dass das Element (100) einen unbelichteten und belichtbaren Halbfertigstempel bildet;
d1) die zweite Oberfläche (112) einen Durchschnittsoberflächenabweichungswert (R_{z}) unter 2 Mikrometer aufweist; und
d2) der Halbfertigstempel einen Innenrand aufweist; wobei die Schutzpackung den Halbfertigstempel derart einschließt, dass der empfindliche Film im Wesentlichen unbelichtet erhalten ist.

17. Zusammenstellung nach Anspruch 16, **dadurch gekennzeichnet, dass** die Packung eine Einrichtung umfasst, um zu verhindern, dass äußere Strahlung eine eingeschlossene Stempeleinrichtung erreicht.

18. Zusammenstellung nach Anspruch 16 oder 17, **dadurch gekennzeichnet, dass** die Packung dichtbar ist; und die Packung im gedichteten Zustand zum Halten eines Antioxidationsmittels ausgebildet ist.

19. Verfahren zum Herstellen eines strukturierten Stempels, mit folgenden Schritten:
Empfangen einer zumindest einen Halbfertigstempel enthaltenden Schutzpackung, wobei der Halbfertigstempel aufweist:
a) ein im Wesentlichen scheibenförmiges Element (100), das eine im Wesentlichen flache erste Oberfläche (105; 106) und eine eine Rückfläche des Halbfertigstempels bildende zweite Oberfläche (112) aufweist; die erste Oberfläche strukturierbar und im Wesentlichen unstrukturiert ist;
b) die erste Oberfläche (105) zumindest bereichsweise von einer strahlungsempfindlichen Lage (160; 240; 260) derart bedeckt ist, dass das Element (100) einen unbelichteten und belichtbaren Halbfertigstempel bildet;
d1) die zweite Oberfläche (112) einen Durchschnittsoberflächenabweichungswert (R_{z}) unter 2 Mikrometer aufweist; und
d2) der Halbfertigstempel einen Innenrand aufweist; und das Verfahren weiterhin folgende Schritte umfasst:
derartiges Belichten der empfindlichen Lage (160; 240; 260), dass ein Informationsmuster aufgezeichnet wird; und
derartiges Strukturieren der ersten Oberfläche gemäß des aufgezeichneten Musters, dass ein strukturierter Stempel erzielt wird.

20. Verfahren nach Anspruch 19, **dadurch gekennzeichnet, dass** der Schritt des Strukturierens umfasst:
Erzeugen eines Musters von Einbuchtungen in der fotosensitiven Lage;
Unterwerfen des Halbfertigstempels eines Ätzverfahrens derart, dass in der ersten Oberfläche (105; 106) des scheibenförmigen Elements (110; 230) ein Einbuchtungsmuster erhalten wird, wobei das Muster in der ersten Oberfläche (105; 106; 110; 230) dem Muster in der fotosensitiven Lage entspricht.

## Revendications

1. Procédé de fabrication d'une matrice de pressage dégrossie, le procédé étant **caractérisé par** les étapes consistant à :
a) obtenir un élément (100) sensiblement en forme de disque présentant une première surface (105; 106) et une seconde surface (112) formant une surface arrière de la matrice de pressage dégrossie ; ladite première surface présentant un chemin de guidage (6; 6') pour indiquer des portions de surface aptes à être structurées (106') dudit élément (100; 130) ; lesdites portions de surface aptes à être structurées (106') étant plates et étant sensiblement non structurées ;
b) appliquer une couche (160; 240; 260) réagissant au rayonnement sur ladite première surface (105) de telle sorte qu'une matrice de pressage dégrossie non exposée et apte à être exposée est réalisée ;
c) enfermer (S80) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), ledit traitement incluant :
d1) traiter ladite seconde surface (112) de la matrice de pressage dégrossie de façon à obtenir une valeur de déviation de surface moyenne (R_{z}) inférieure à 2 micromètres.

2. Procédé de fabrication d'une matrice de pressage dégrossie, le procédé comprenant les étapes consistant à :
a) obtenir un élément (100) sensiblement en forme de disque présentant une première surface (105; 106) ; et une seconde surface (112) formant une surface arrière de la matrice de pressage dégrossie ; ladite première surface présentant un chemin de guidage (6; 6') pour indiquer des portions de surface aptes à être structurées (106') dudit élément (100; 130) ; lesdites portions de surface aptes à être structurées (106') étant plates et étant sensiblement non structurées ;
b) appliquer une couche (160; 240; 260) réagissant au rayonnement sur ladite première surface (105) de telle sorte qu'une matrice de pressage dégrossie non exposée et apte à être exposée est réalisée ;
c) enfermer (S80) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), ledit traitement incluant :
d2) la configuration (S30) d'un périmètre interne de la matrice de pressage dégrossie.

3. Procédé de fabrication d'une matrice de pressage dégrossie, le procédé étant **caractérisé par** les étapes consistant à :
a) obtenir un élément (100) sensiblement en forme de disque ayant une première surface (105; 106) et une seconde surface (112) formant une surface arrière de la matrice de pressage dégrossie ; ladite première surface présentant un chemin de guidage (6; 6') pour indiquer des portions de surface aptes à être structurées (106') dudit élément (100; 130), lesdites portions de surface aptes à être structurées (106') étant plates et étant sensiblement non structurées ;
b) appliquer une couche (160; 240; 260) réagissant au rayonnement sur ladite première surface (105) de manière à réaliser une matrice de pressage dégrossie non exposée et apte à être exposée ;
c) enfermer (S80) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), de telle sorte qu'elle s'adapte géométriquement dans un moule d'une machine de moulage à injection ; ledit traitement incluant :
d2) la configuration (S30) d'un périmètre interne de la matrice de pressage dégrossie ; et
d3) la configuration d'un périmètre externe de la matrice de pressage dégrossie de telle sorte que lesdits périmètres sont sensiblement circulaires et sensiblement concentriques.

4. Procédé selon la revendication 2 ou 3, où ledit traitement comprend :
d1) traiter ladite seconde surface (112) de la matrice de pressage dégrossie de façon à obtenir une valeur de déviation de surface moyenne (R_{z}) inférieure à 2 micromètres.

5. Procédé selon la revendication 1, où ledit traitement comprend :
d2) configurer (S30) un périmètre interne de la matrice de pressage dégrossie.

6. Procédé selon la revendication 2 ou 5, où ledit traitement comprend :
d3) configurer un périmètre externe de la matrice de pressage dégrossie de telle sorte que lesdits périmètres sont sensiblement circulaires et sensiblement concentriques.

7. Procédé selon l'une des revendications 2, 5 ou 6, où ledit périmètre interne de la matrice de pressage dégrossie est configuré (S30) par découpage après l'application de ladite couche réagissant au rayonnement (160; 240; 260).

8. Procédé selon la revendication 1, 4 ou 5, où ledit traitement inclut le polissage.

9. Procédé selon la revendication 1, 4, 5 ou 8 où ledit traitement inclut le polissage de ladite seconde surface (112) de manière à obtenir une valeur de déviation de surface maximum (Rₘₐₓ) inférieure à 3 micromètres.

10. Procédé selon l'une des revendications précédentes, où ledit élément en forme de disque (100) est réalisé en métal.

11. Procédé selon l'une des revendications précédentes, comprenant en outre l'étape consistant à réaliser une couche métallique (110; 230) sur au moins une portion de la surface plate (105) de l'élément en forme de disque (100).

12. Procédé selon la revendication 11, où ladite couche sensible est appliquée sur la surface (106) de la couche de métal (110; 230).

13. Procédé selon la revendication 11 ou 12, où la couche de métal (110) comprend du nitrure de titane.

14. Procédé selon l'une des revendications 1 à 13, comprenant en outre les étapes consistant à :
réaliser une couche d'arrêt d'attaque (220) sur ladite surface (105) de l'élément (100) ;
réaliser une autre couche (230) sur la couche d'arrêt d'attaque (220), ladite autre couche comprenant un premier matériau qui peut être bien attaqué par un certain réactif d'attaque ; ladite autre couche (230) réalisant lesdites portions de surface aptes à être structurées ;
la couche d'arrêt d'attaque comprenant un matériau moins facile à attaquer par ledit réactif d'attaque.

15. Procédé de fabrication d'une réplique de disque optique, comprenant les étapes consistant à :
recevoir une matrice de pressage dégrossie enfermée dans un boîtier et obtenue par le procédé selon l'une des revendications 1 à 14 ;
retirer ladite matrice de pressage dégrossie dudit boîtier ;
installer ladite matrice de pressage dégrossie dans un appareil d'écriture d'informations ;
détecter une position du chemin de guidage ;
exposer la couche sensible (160; 240; 260) de manière à enregistrer un motif d'informations, la position des informations exposées dépendant de la position détectée ;
structurer ladite première surface de ladite matrice de pressage dégrossie en accord avec le motif exposé de manière à obtenir une matrice de pressage structurée ;
fixer ladite matrice de pressage structurée dans un moule
injecter une résine dans ledit moule pour former une réplique de ladite matrice de pressage structurée de telle sorte que la structure dans ladite réplique est une image spéculairement identique de la structure de matrice de pressage ;
retirer ladite réplique dudit moule.

16. Ensemble de pièces, comprenant :
une matrice de pressage dégrossie ; et
un boîtier de protection ;
ladite matrice de pressage dégrossie comportant :
un élément (100) sensiblement en forme de disque présentant une première surface (105; 106) et une seconde surface (112) formant une surface arrière de la matrice de pressage dégrossie ; ladite seconde surface (112) ayant une valeur de déviation de surface moyenne (R_{z}) inférieure à 2 micromètres ; où
ladite première surface présente un chemin de guidage (6; 6') pour indiquer des portions de surface aptes à être structurées (106') dudit élément (100; 130); lesdites portions de surface aptes à être structurées (106') étant sensiblement plates et non structurées ;
au moins une partie desdites portions de surface aptes à être structurées (106') est recouverte par une couche (160; 240; 260) réagissant au rayonnement de telle sorte que ledit élément (100) constitue une matrice de pressage dégrossie non exposée et apte à être exposée ; et où
ledit boîtier de protection renferme ladite matrice de pressage dégrossie de telle sorte que le film sensible est maintenu d'une manière sensiblement non exposée.

17. Ensemble selon la revendication 16, où le boîtier comprend des moyens pour empêcher qu'un rayonnement externe atteigne un moyen formant matrice de pressage enfermé.

18. Ensemble selon la revendication 16 ou 17, où le boîtier peut être scellé, et le boîtier, lorsqu'il est scellé, est apte à retenir un anti-oxydant.

19. Procédé d'obtention d'une matrice de pressage structurée, le procédé comprenant les étapes consistant à :
recevoir un boîtier de protection contenant au moins une matrice de pressage dégrossie, ladite matrice de pressage dégrossie comportant :
un élément sensiblement en forme de disque (100) ayant une première surface (105; 106) et une seconde surface (112) formant une surface arrière de la matrice de pressage dégrossie, ladite seconde surface (112) ayant une valeur de déviation de surface moyenne (R_{z}) inférieure à 2 micromètres ; où
ladite première surface présente un chemin de guidage (6; 6') pour indiquer des portions de surface aptes à être structurées (106') dudit élément (100; 130) ; lesdites portions de surface aptes à être structurées (106') étant sensiblement plates et non structurées ;
au moins une partie desdites portions de surface aptes à être structurées (106') est recouverte par une couche (160; 240; 260) réagissant au rayonnement de telle sorte que ledit élément (100) constitue une matrice de pressage dégrossie non exposée et apte à être exposée ;
le procédé comprenant en outre les étapes consistant à :
retirer ladite au moins une matrice de pressage dégrossie dudit boîtier de protection ;
installer ladite matrice de pressage dégrossie dans un appareil d'écriture d'informations ;
détecter une position du chemin de guidage ;
exposer la couche sensible (160; 240; 260) de manière à enregistrer un motif d'informations, la position des informations exposées dépendant de la position détectée ;
structurer lesdites portions de surface aptes à être structurées (106') de ladite matrice de pressage dégrossie en accord avec le motif exposé de façon à obtenir une matrice de pressage structurée.

20. Procédé selon la revendication 19, où ladite étape de structuration comprend :
la création d'un motif d'encoches dans la couche photosensible ;
la soumission de la matrice de pressage dégrossie à un processus d'attaque de telle sorte qu'un motif d'encoches est obtenu dans la première surface (105; 106) de l'élément en forme de disque (110; 230), le motif dans la première surface (105; 106; 110; 230) correspondant au motif dans la couche photosensible.
